# EUROPEAN PATENT SPECIFICATION

(11) **EP 3 192 116 B1**
(45) Date of publication and mention of the grant of the patent: **17.04.2019**
(21) Application number: 15766758.5
(22) Date of filing: 21.08.2015
(51) Int. Cl.: H01M 8/0234, H01M 8/0239, H01M 8/0243, H01M 8/0245, H01M 8/04119

(54) **A METHOD TO PRODUCE A GAS DIFFUSION LAYER AND A FUEL CELL COMPRISING A GAS DIFFUSION LAYER**
VERFAHREN ZUR HERSTELLUNG EINER GASDIFFUSIONSSCHICHT UND BRENNSTOFFZELLE MIT EINER GASDIFFUSIONSSCHICHT
PROCÉDÉ DE FABRICATION DE COUCHE DE DIFFUSION DE GAZ ET PILE À COMBUSTIBLE COMPRENANT UNE COUCHE DE DIFFUSION DE GAZ

(30) Priority: 09.09.2014 EP 14184065; 28.04.2015 EP 15165515
(43) Date of publication of application: 19.07.2017
(73) Proprietor: PAUL SCHERRER INSTITUT, CH-5232 Villigen (CH)
(72) Inventor: BOILLAT, Pierre, CH-8005 Zürich (CH); BÜCHI, Felix, CH-4900 Langenthal (CH); GUBLER, Lorenz, CH-5417 Untersiggenthal (CH); FORNER CUENCA, Antoni, 02142 Cambridge, MA (US); PADESTE, Celestino, 5430 Wettingen (CH)
(74) Representative: Fischer, Michael
(86) International application number: PCT/EP2015/069284
(87) International publication number: WO 2016/037833

(56) References cited:
- EP-A1- 1 693 101
- EP-A1- 1 947 722
- WO-A1-2014/061280
- US-A1- 2004 242 794

## Description

The present invention relates to a method to produce a gas diffusion layer and a fuel cell comprising said gas diffusion layer.

The idea of engineering water pathways through gas diffusion layers in fuel cells is a permanent topic in the operation of fuel cell stacks.

The presence of holes as engineered water pathways has been reported a few times, including *ex situ* and *in situ* measurements to study the effect of this approach. The generated holes having 80µm diameters using a laser and an improved performance in a small scale cell (1 cm²) using this perforated gas diffusion layers has been reported. An improved stability in a 6-cells stack (area of 30 cm²) was reported in which the GDL has been modified in this way, and in an *ex situ* study using environmental scanning electron microscopy (ESEM) water accumulation in perforated GDLs was visualized.

Laser perforation of GDLs was also reported. Much larger holes (300 µm) and with a high hole density were used. *In situ* tests using polarization curves and neutron imaging have shown some improvement in certain conditions (low current and low humidity), but also increased mass transport losses for such large holes. Finally, the use of mechanical pinning was reported to create one single hole at specific locations of a single channel fuel cell (under the flow channel or under the land, and near the inlet or outlet of the cell), and the impact of this hole on water distribution was studied.

US 2004/242794 A1 discloses a method for giving hydrophilic property to carbon fiber. Carbon fiber are treated with a monomer (acrylic acid) and then irradiated to obtain a grafter carbon fiber.

EP 1 947 722 A1 relates to the preparation of a hydrophilised fuel cell separator. A resin coated carbon fiber is treated and coated with a radically polymerisable monomer and irradiated.

EP 1 693 101 A1 describes the preparation of a membrane, such as a polymer electrolyte membrane for a fuel cell by irradiating the base polymer film, subsequently grafting with a radically polymerisable monomer and finally sulfonating the grafted copolymer.

It is the objective of the present invention to provide a method to produce a gas diffusion layer and a fuel cell comprising said gas diffusion layer; said gas diffusion layer allowing higher design flexibility and lower cost.

This objective is achieved according to the present invention by a method to produce electrically conductive porous materials with distributed wettability, comprising the steps of:
a) coating the external and internal surfaces of a porous base material made of carbon fiber or Titanium with Fluoroethylene-Propylene (FEP) and/or perfluoroalkoxy (PFA) and/or Ethylene-Tetrafluoroethylene (ETFE) or any other hydrophobic polymer;
b) exposing the coated porous material to irradiation through a blocking mask such that only parts of the coated porous material are exposed;
c) immersing the previously exposed coated porous material in a monomer solution and heating to a temperature higher than 45°C, resulting in the graft co-polymerization of monomers on the exposed coated porous material.

Compared to the methods known in the prior art, the wettability change using radiation grafting according to the present invention is more cost-effective and allows higher design flexibility. For example, elongated in-plane water pathways cannot be realized using holes. Furthermore, a better durability is obtained due to the covalent bonding of the grafted hydrophilic compound.

With respect to a fuel cell, the objective is achieved according to the present invention by a fuel cell having a gas diffusion layer on the anode or the cathode side; said gas diffusion layer is produced by a method according to any of the claims 1 to 11, and comprises hydrophilic parts in order to achieve a distributed wettability and wherein part of channels in an anode or a cathode flow plate aligned with said gas diffusion layer are connected to a water inlet and flooded with water wherein the water channels and the hydrophilic parts of the gas diffusion layer form a water supply network used to humidify the fuel cell.

Advantageous embodiments of the present invention are listed hereinafter and can be combined in any possible and/or suitable combination:
a) the base material is a porous material is an electrically conductive or non-conductive material;
b) the applied coating (a) can be distributed over the thickness in whatever configuration, such as homogeneusly distributed over the thickness (high design freedom);
c) photon-type radiation is used for irradiation, preferably in an energy range from UV to gamma sources;
d) in addition or alternatively to photon-type radiation, particle beam is used to generate initiators, such as plasma, accelerated and heavy ions;
e) the penetration depth of the irradiation is regulated in order to obtained a targeted modification depth, preferably previously produced stacks of various materials, such as gas diffusion layer and microporous layers, can be modified by the targeted modification depth;
f) any patterned design can be defined, such us parallel slits or circles;
g) lithography methods are used;
h) the monomer solution of step (c) comprises a radically activated monomer resulting in graft copolymerization of a hydrophilic monomer, such us N-vinylformamide, acrylic acid, methacrylic acid, styrene, sufonated styrene, vinylpyridine, glycerol methacrylate among others;
i) the monomer solution is used as a pure liquid or is diluted with a solvent or/and other compounds and one or more additional monomers;
j) with an additional step (d) consisting on further exposing the material to solutions and different pressure and temperature conditions in order to pursue additional chemical reaction to further reduce the contact angle or implement another desired property, such as hydrolysis or sulfonation;
k) negative pressures are additionally applied in step (c) to allow the penetration of the solution into the material pores of the porous material;
l) a surfactant or any lowering surface tension agents are added to the monomer solution to allow the penetration into the material pores;
m) the porous material is exposed to vapor phase of the monomer or any other mixture of gases;
n) the heat removal by water evaporation is sufficient to remove all the heat produced in the fuel cell, suppressing the need of an additional cooling system;
o) the water supply network is placed on the cathode side instead of the anode side;
p) the water supply network is used for the supply of water in an electrolyser stack or in a stack of fuel cells.

Preferred embodiments of the present invention are hereinafter described in more detail with respect to the attached drawings which depict in:
- Figure 1: schematically the relation between the pathways for liquid water and for reactant gases in porous materials;
- Figure 2: schematically a synthesis method according to the present invention for the porous material with patterned wettability;
- Figure 3: schematically the distribution of different components in the gas diffusion layer visualized by SEM-EDX;
- Figure 4: schematically the fine distribution of water supply using engineered hydrophilic channels in the gas diffusion layer; and
- Figure 5: schematically a fuel cell stack without coolant channels and using monolithic plates made of carbon (left) or stamped stainles steel (right).

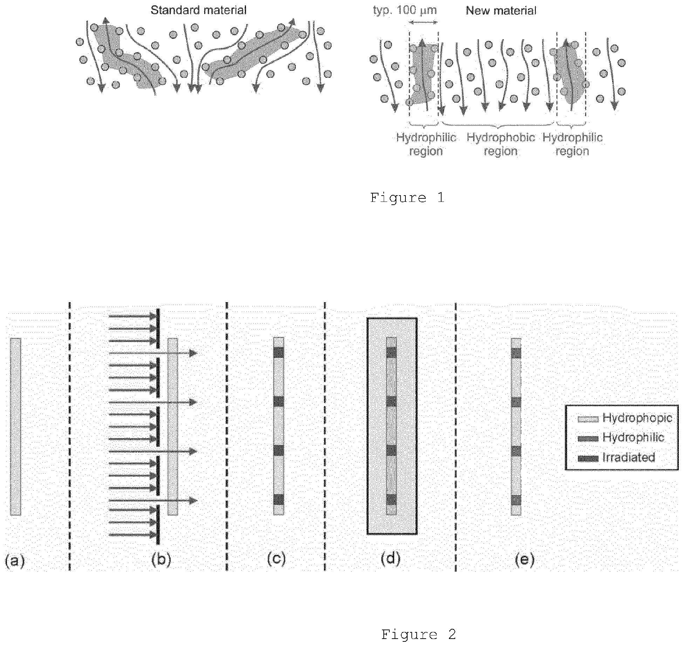

The present invention discloses a method of manufacturing gas diffusion layers (GDL) with a defined pattern of hydrophobic and hydrophilic regions. The interest of such materials for fuel cell applications is their potential use on the cathode side to improve the transport of oxygen in presence of liquid water, as discussed in the literature and illustrated in Figure 1. Figure 1 illustrates the relation between the pathways for liquid water and for reactant gases in porous materials. Left: in standard hydrophobic materials. Right: in the new proposed material according to the present invention.

A further possibility of application is to use this invention as a help for evaporation cooling in fuel cells and electrolyzers, using the hydrophilic pathways as a help to guide water injection. Other applications relying on porous supports that require through plane conduction of water or any other liquid can benefit from this material, such as microfluidics (dialysis).

The proposed method to synthesize such a material is based on radiation induced graft polymerization. The originally hydrophobic material is exposed to a beam which is masked in certain regions. Alternatives to define the exposed regions are to use lithography or a scanning pencil beam. The regions which have been exposed are "activated". Consequently the graft copolymerization process will occur only in these regions. The synthesis process is summarized in Figure 2. Figure 2 shows the synthesis method according to the present invention for the porous material with patterned wettability. (a): Base porous material (hydrophobized). (b): Irradiation using a mask. (c): Locally irradiated base material. (d): Impregnation with grafting solution. (e) Resulting material with patterned wettability.

Currently, the realization of a first GDL hydrophobized using Fluoro-Ethylene-Propylene and with localized grafting of Acrylic Acid as a hydrophilic compound has been demonstrated. For this example a gas diffusion layer commercially available Toray TPGH-090 was coated with 30% weight of FEP and sintered. The material was then irradiated with an electron beam of 1.5 MeV energy and 50.0 kGy dose. A mask of 2 mm thickness stainless stell was used with drilled slits of 500 µm. The irradiated material was placed into a reactor of 50 mL and 50 mbar pressure. The grafting solution (15% vol Acrylic acid in water) was pumped in after 60 min of nitrogen bubling. The reaction was brought to a temperature of 60°C.

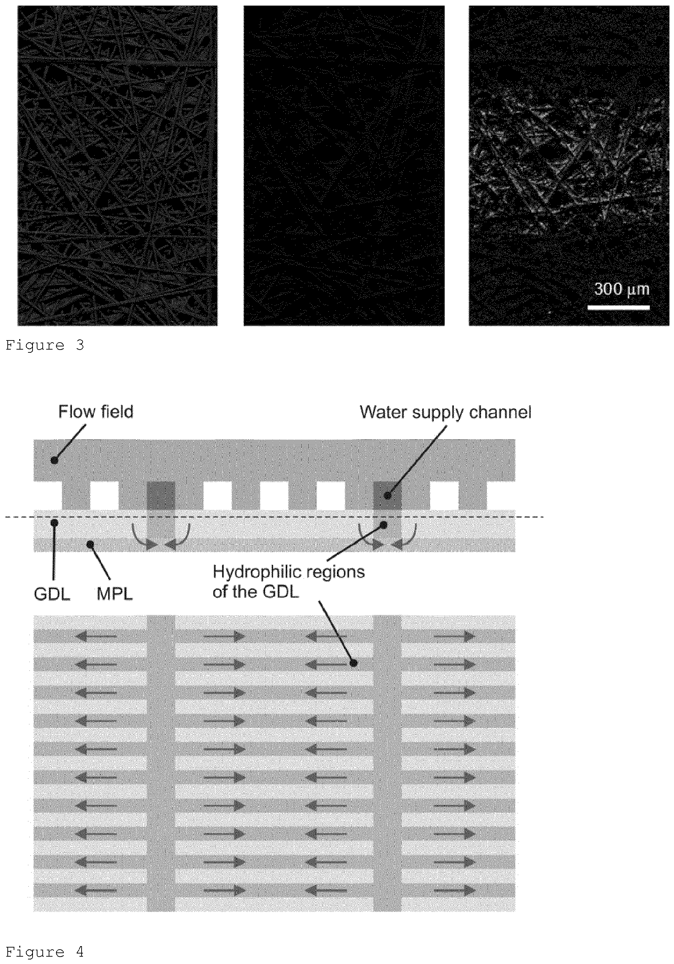

The distribution of the different components visualized by SEM-EDX is shown in Figure 3. The current method uses vacuum for a correct wetting of the material with the grafting solution, but the process can be realized in an also cost effective way, for example using a surfactant or vapor phase grafting. Figure 3 shows SEM-EDX mappings of a gas diffusion layer hydrophobized using FEP and locally grafted with Acrylic Acid according to the present invention. Left: C (carbon) signal showing the carbon fibers. Middle: F (fluorine) signal showing the distribution of coating. Right: Na (sodium) signal showing the grafted Acrylic Acid, after exchange in NaOH for visualization purposes.

It is believed that this method is of significant interest, since the performance of the fuel cell is improved by the use of this material. Moderate additional costs are expected due the simplicity of the process and the low cost of the chemicals involved.

### General thoughts on patentability

- In particular, the use of FEP as hydrophobizing agent prior to grafting is not published yet. The use of FEP is a critical part of the process due to better radiation resistance and grafting kinetics of this material compared to the PTFE normally used for hydrophobization. The patent application therefore covers all GDL using FEP as hydrophobizing agent which is grafted afterwards.

In addition, the implementation of the evaporation cooling concept using the material above can be realized. The direct injection of liquid water in a fuel cell for the purpose of humidification and cooling has important advantages:
- Operation of the cell with dry gases, suppressing the bulky and costly external humidifiers
- Efficient cooling, potentially suppressing the need for an additional coolant circulation

The practical implementation of evaporation cooling is difficult. Our studies on differential cells have shown that, on the local scale, humidification from the anode side is much more effective than from the cathode side. However, due to the permeation through the membrane and the electro osmotic drag, water injected in the anode inlet will be transported to the cathode side. Figure 4 shows fine distribution of water supply using engineered hydrophilic channels in the GDL. Below the water soaked hydrophilic regions, hydrogen is transported to the electrode through the hydrophobic micro-porous layer (MPL) usually present in fuel cells.

The present invention now uses a design that provides some of the channels on the anode side (for example, each 3^{rd} channel) as water supply channels being completely flooded with water (these supply channels are connected to another manifold than the hydrogen supply channels). To transport the water efficiently to the regions between the water supply channels, elongated hydrophilic water pathways are created in the GDL (using the method described above). To avoid gas bubbling into the water supply channels, those can optionally be covered by a hydrophilic region as illustrated in Figure 4. As the transport of gas is not very critical on the anode side, a significant portion of the GDL volume (e.g. 50% or even 75%) can be used for the transport of water. Besides their role in distribution the water away from the water supply channels, the finely spaced hydrophilic channels are appropriate to increase the water surface for a more efficient evaporation.

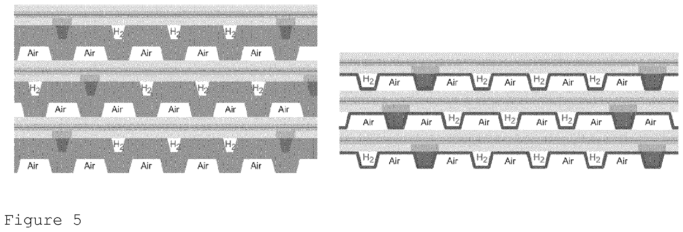

The key interest of the present invention resides in the fact that the use of the common components can be maintained and nothing is particularly added compared to the classical fuel cell technology. The extra cost of the present GDL modification method is offset by the system cost reduction due to the suppression of external humidifiers. Even further, if the evaporation cooling is, as targeted, sufficient to remove all the heat produced, a further cost and size reduction by suppressing the coolant circulation and by using monolithic separator plates can be realized. Such a design is illustrated in Figure 5. Due to these advantages, the present idea has a large potential compared to the existing designs for evaporation cooling. Figure 5 illustrates a stack based on the present idea, without coolant channels and using monolithic plates made of carbon (left) or stamped stainles steel (right).

The present invention provides a significant advantage compared to other proposed ideas due to the following features:
- The use of an industrially available irradiation method (e-beam) and low cost chemicals, providing a cost advantage to other proposed methods (e.g. deposition inkjet or screen printing)
- The use of a chemical modification method with a better durability as compared to other physical deposition methods
- Compared to some of the methods (e.g. perforation), the present design offers a significantly higher flexibility for the design of the hydrophilic area/volumina of a gas diffusion layer.

On the evaporation cooling (application) disclosure, the significant advantage of the present inventions resides in the fact that no additional layer is included, and that no layer is significantly bulkier or expensive than in classical fuel cell designs (as opposed, for example, to the water transport plates of the UTC design). Thus, the following advantages are realizable:
- Reduced stack and system cost, which is critical for automotive applications
- Reduced system size (= increase of power density), which is essential as well for automotive applications

## Claims

1. A method to produce electrically conductive porous materials with distributed wettability,
comprising the steps of:
a) coating the external and internal surfaces of a porous base material made of carbon fiber or Titanium with Fluoroethylene-Propylene (FEP) and/or perfluoroalkoxy (PFA) and/or Ethylene-Tetrafluoroethylene (ETFE) or any other hydrophobic polymer;
b) exposing the coated porous material to irradiation through a blocking mask such that only parts of the coated porous material are exposed;
c) immersing the previously exposed coated porous material in a monomer solution and heating to a temperature higher than 45°C, resulting in the graft co-polymerization of hydrophilic monomers on the exposed coated porous material.

2. The method according to any of the preceding claims wherein photon-type radiation is used for irradiation, preferably in an energy range from UV to gamma sources.

3. The method according to any of the preceding claims wherein particle beam is used to generate initiators, such as plasma, accelerated and heavy ions.

4. The method according to any of the preceding claims wherein the penetration depth of the irradiation is regulated in order to obtain a targeted modification depth, preferably previously produced stacks of various materials, such as gas diffusion layer and microporous layers, are modified by the targeted modification depth.

5. The method according to any of the preceding claims, wherein a patterned design is defined for the exposing step, such us parallel slits or circles.

6. The method according to any of the preceding claims, wherein the monomer solution of step (c) comprises a radically activated monomer resulting in graft copolymerization of a hydrophilic polymer, such us N-vinylformamide, acrylic acid, methacrylic acid, styrene, sufonated styrene, vinylpyridine, glycerol methacrylate among others.

7. The method according to any of the preceding claims, wherein the monomer solution is used as a pure liquid or is diluted with a solvent or/and other compounds and one or more additional monomers.

8. The method according to any of the preceding claims, wherein with an additional step (d) consisting on further exposing the coated porous material to solutions and different pressure and temperature conditions in order to pursue additional chemical reaction to further reduce the contact angle or implement another desired property, such as hydrolysis or sulfonation.

9. The method according to any of the preceding claims, wherein negative pressures are additionally applied in step (c) to allow the penetration of the solution into the material pores of the exposed coated porous material.

10. The method according to any of the preceding claims, wherein a surfactant or any lowering surface tension agents are added to the monomer solution to allow the penetration into the material pores of the exposed coated porous material.

11. The method according to any of the preceding claims, wherein the exposed coated porous material is exposed to vapor phase of the monomer or any other mixture of gases.

12. A fuel cell having a gas diffusion layer on the anode or the cathode side, wherein the gas diffusion layer is produced by the method according to any of the preceding claims and comprises hydrophilic parts in order to achieve a distributed wettability wherein part of channels in an anode or cathode flow plate aligned with said gas diffusion layer are connected to a water inlet and flooded with water wherein the water channels and the hydrophilic parts of the gas diffusion layer form a water supply network used to humidify the fuel cell.

13. The fuel cell according to claim 12, wherein the heat removal by water evaporation is sufficient to remove all the heat produced in the fuel cell, suppressing the need of an additional cooling system.

14. The fuel cell according to claims 12 or 13, wherein the water supply network is used for the supply of water in an electrolyser stack or in a stack of fuel cells.

## Patentansprüche

1. Ein Verfahren zur Herstellung von elektrisch leitfähigem porösen Material mit einer verteilten Benetzbarkeit herzustellen,
umfassend die folgenden Schritte:
a) das Beschichten der externen und internen Oberflächen eines porösen Basismaterials aus Kohlenstofffasern oder Titan mit Fluor-Ethylen-Propylen (FEP) und/oder Perfluoralkoxy (PFA) und/oder Ethylen-Tetrafluorethylen (ETFE) oder irgendein anderes wasserabstossendes Polymer;
b) das Aussetzten des beschichteten, porösen Materials einer Bestrahlung durch eine teilblockierende Maske, so dass nur Teile des beschichteten, porösen Materials bestrahlt werden;
c) das Eintauchen des zuvor der Bestrahlung ausgesetzten beschichteten, porösen Materials in eine Monomer-Lösung und das Erwärmen auf eine Temperatur höher als 45°C, was in einer Pfropf-Kopolymerisation von hydrophilen Monomeren auf dem der Bestrahlung ausgesetzten, beschichteten, porösen Material resultiert.

2. Das Verfahren gemäss Patentanspruch 1, wobei eine Photonen-Strahlung für die Bestrahlung benutzt wird, vorzugsweise in einem Energiebereich von UV bis Gammastrahlung.

3. Das Verfahren gemäss einem der vorherigen Ansprüche, wobei ein Teilchenstrahl verwendet wird um Initiatoren, wie zum Beispiel Plasma, beschleunigte Ionen und schwere Ionen zu erzeugen.

4. Das Verfahren gemäss einem der vorherigen Ansprüche, wobei die Eindringtiefe der Bestrahlung reguliert wird um eine anvisierte Tiefe der Polymermodifikation zu erzielen, wobei vorzugsweise vorher erzeugte Stapel aus verschiedenen Materialien, wie zum Beispiel Gasdiffusionsschichten und mikroporöse Schichten, durch die anvisierte Tiefe der Polymermodifikation abgeändert werden.

5. Das Verfahren gemäss einem der vorherigen Ansprüche, wobei ein strukturiertes Design für den Belichtungsschritt definiert wird, wie zum Beispiel parallele Schlitze oder Kreise.

6. Das Verfahren gemäss einem der vorherigen Ansprüche, wobei die Monomer-Lösung aus Schritt (c) einen durch Radikale aktivierten Monomer beinhaltet, was in einer Pfropf-Kopolymerisation eines hydrophilen Polymers, wie zum Beispiel unter anderem N-Vinylformamid, Acrylsäure, Metacrylsäure, Styren, sulfoniertem Styren, Vinylpyridin, Glyzerol-Metacrylaten, resultiert.

7. Das Verfahren gemäss einem der vorherigen Ansprüche, wobei die Monomer-Lösung als reine Monomer-Flüssigkeit verwendet wird oder mit einem Lösungsmittel und/oder anderen Komponenten und einem oder mehreren zusätzlichen Monomeren verdünnt wird.

8. Das Verfahren gemäss einem der vorherigen Ansprüche, wobei mit einem zusätzlichen Schritt (d) bestehend aus dem weiteren Aussetzten von des beschichteten porösen Materials mit Lösungen bei verschiedenen Druck- und Temperaturbedingungen um zusätzliche chemische Reaktionen zu betreiben, damit den Kontaktwinkel weiter zu reduzieren oder eine andere gewünschte Eigenschaft, wie zum Beispiel Hydrolyse oder Sulfonierung, zu realisieren.

9. Das Verfahren gemäss einem der vorherigen Ansprüche, wobei negative Drücke zusätzlich in Schritt (c) angewandt werden um das Eindringen der Lösung in die Materialporen des der Bestrahlung ausgesetzten beschichteten porösen Materials zu ermöglichen.

10. Das Verfahren gemäss einem der vorherigen Ansprüche, wobei ein Benetzungsmittel oder irgendein anderes Mittel zur Senkung der Oberflächenspannung zu der Monomer-Lösung hinzugefügt wird um das Eindringen der Lösung in die Materialporen des der Bestrahlung ausgesetzten beschichteten porösen Materials zu ermöglichen.

11. Das Verfahren gemäss einem der vorherigen Ansprüche, wobei das der Bestrahlung ausgesetzte beschichtete poröse Material einer Dampfphase des Monomers oder einer anderen Gasmischung ausgesetzt wird.

12. Eine Brennstoffzelle, die auf der Anoden- oder Kathodenseite eine Gasdiffusionsschicht umfasst, wobei die Gasdiffusionsschicht gemäss dem Verfahren gemäss einem der vorherigen Ansprüche erzeugt wurde und hydrophile Teile umfasst um eine verteilte Benetzbarkeit zu erreichen, wobei Teile von Kanälen in einer mit besagter Gasdiffusionsschicht verbundenen anoden- oder kathodenseitigen Durchflussplatte mit einem Wassereinlass verbunden sind und mit Wasser geflutet wird, wobei die Wasserkanäle und die hydrophilen Teile der Gasdiffusionsschicht ein Netzwerk zur Wasserversorgung bilden, das zur Befeuchtung der Brennstoffzelle benutzt wird.

13. Die Brennstoffzelle gemäss Anspruch 12, wobei die Wärmeabfuhr durch die Verdunstung von Wasser ausreichend ist um die gesamte in der Brennstoffzelle produzierte Wärme zu entfernen, wodurch das Vorsehen eines zusätzlichen Kühlsystems vermieden wird.

14. Die Brennstoffzelle gemäss Anspruch 12 oder 13, wobei das Netzwerk zur Wasserversorgung für die Zufuhr von Wasser in einem Stapel von Elektrolyseuren oder in einem Stapel von Brennstoffzellen benutzt wird.

## Revendications

1. Méthode afin de produire des matériaux poreux électriquement conducteurs avec une mouillabilité distribuée, comprenant les étapes :
a) de revêtement des surfaces externe et interne d'un matériau de base poreux constitué de fibre de carbone ou de titane avec du fluoroéthylène-propylène (FEP) et/ou du perfluoroalcoxy (PFA) et/ou de l'éthylène-tétrafluoroéthylène (ETFE) ou tout autre polymère hydrophobe ;
b) d'exposition du matériau poreux revêtu à une irradiation à travers un masque de blocage de telle sorte que seules des parties du matériau poreux revêtu soient exposées ;
c) d'immersion du matériau poreux revêtu précédemment exposé dans une solution de monomère et de chauffage jusqu'à une température supérieure à 45 °C, entraînant la copolymérisation avec greffage de monomères hydrophiles sur le matériau poreux revêtu exposé.

2. Méthode selon l'une quelconque des revendications précédentes dans laquelle un rayonnement de type photons est utilisé pour l'irradiation, de préférence dans une gamme d'énergie allant de sources UV à gamma.

3. Méthode selon l'une quelconque des revendications précédentes dans laquelle un faisceau de particules est utilisé pour engendrer des initiateurs, tels qu'un plasma, des ions accélérés et lourds.

4. Méthode selon l'une quelconque des revendications précédentes dans laquelle la profondeur de pénétration de l'irradiation est régulée dans le but d'obtenir une profondeur de modification ciblée, de préférence des empilements précédemment produits de divers matériaux, tels qu'une couche de diffusion de gaz et des couches microporeuses, sont modifiés par la profondeur de modification ciblée.

5. Méthode selon l'une quelconque des revendications précédentes, dans laquelle un modèle à motifs est défini pour l'étape d'exposition, tel que des fentes parallèles ou des cercles.

6. Méthode selon l'une quelconque des revendications précédentes, dans laquelle la solution de monomère de l'étape (c) comprend un monomère activé par voie radicalaire entraînant la copolymérisation avec greffage d'un polymère hydrophile, tel que le N-vinylformamide, l'acide acrylique, l'acide méthacrylique, le styrène, le styrène sulfoné, la vinylpyridine, le méthacrylate de glycérol entre autres.

7. Méthode selon l'une quelconque des revendications précédentes, dans laquelle la solution de monomère est utilisée sous la forme d'un liquide pur ou est diluée avec un solvant ou/et d'autres composés et un ou plusieurs monomères supplémentaires.

8. Méthode selon l'une quelconque des revendications précédentes, dans laquelle avec une étape supplémentaire (d) consistant à exposer encore le matériau poreux revêtu à des solutions et des conditions de pression et de température différentes dans le but de poursuivre une réaction chimique supplémentaire afin de réduire encore l'angle de contact ou de mettre en oeuvre une autre propriété souhaitée, telle qu'une hydrolyse ou une sulfonation.

9. Méthode selon l'une quelconque des revendications précédentes, dans laquelle des pressions négatives sont appliquées en plus à l'étape (c) afin de permettre la pénétration de la solution à l'intérieur des pores de matériau du matériau poreux revêtu exposé.

10. Méthode selon l'une quelconque des revendications précédentes, dans laquelle un agent tensioactif ou tous agents d'abaissement de la tension de surface sont ajoutés à la solution de monomère afin de permettre la pénétration à l'intérieur des pores de matériau du matériau poreux revêtu exposé.

11. Méthode selon l'une quelconque des revendications précédentes, dans laquelle le matériau poreux revêtu exposé est exposé à une phase vapeur du monomère ou tout autre mélange de gaz.

12. Pile à combustible ayant une couche de diffusion de gaz sur le côté anode ou cathode, dans laquelle la couche de diffusion de gaz est produite par la méthode selon l'une quelconque des revendications précédentes et comprend des parties hydrophiles dans le but d'atteindre une mouillabilité distribuée dans laquelle une partie des canaux dans une plaque d'écoulement anodique ou cathodique alignée avec ladite couche de diffusion de gaz sont raccordés à une entrée d'eau et inondés d'eau lorsque les canaux d'eau et les parties hydrophiles de la couche de diffusion de gaz forment un réseau d'approvisionnement en eau utilisé pour humidifier la pile à combustible.

13. Pile à combustible selon la revendication 12, dans laquelle le retrait de chaleur par évaporation d'eau est suffisant pour retirer la totalité de la chaleur produite dans la pile à combustible, supprimant le besoin d'un système de refroidissement supplémentaire.

14. Pile à combustible selon les revendications 12 ou 13, dans laquelle le réseau d'approvisionnement en eau est utilisé pour l'approvisionnement en eau dans un empilement d'électrolyseurs ou dans un empilement de piles à combustible.
